# EUROPÄISCHE PATENTSCHRIFT

(11) **EP 1 525 406 B1**
(45) Veröffentlichungstag und Bekanntmachung des Hinweises auf die Patenterteilung: **20.08.2008**
(21) Anmeldenummer: 03766280.6
(22) Anmeldetag: 24.07.2003
(51) Int. Cl.: F16D 1/072

(54) **AUFPRESSBARE NABE UND NOCKENWELLE**
PRESS-FITTED HUB AND CAMSHAFT
MOYEU MONTABLE PAR PRESSION ET ARBRE A CAMES

(30) Priorität: 31.07.2002 EP 02017216
(43) Veröffentlichungstag der Anmeldung: 27.04.2005
(73) Patentinhaber: Bürgler, Robert, 9491 Ruggell (LI)
(72) Erfinder: Bürgler, Robert, 9491 Ruggell (LI)
(74) Vertreter: Hepp, Dieter
(86) Internationale Anmeldenummer: PCT/EP2003/008130
(87) Internationale Veröffentlichungsnummer: WO 2004/013507

(56) Entgegenhaltungen:
- EP-A- 1 058 033
- WO-A-01/94802
- WO-A-99/57450
- FR-A- 2 580 341
- US-A- 4 886 392

## Beschreibung

Die Erfindung betrifft eine Nabe und einen Nocken mit einer Nabe zum Aufpressen auf einen Grundkörper und eine Nockenwelle mit mindestens einer aufgepressten Nabe, insbesondere einem Nocken.

Es ist bekannt Nockenwellen durch Aufpressen von Nocken auf eine Welle herzustellen. An den jeweils vorgesehenen Positionen für die Nocken wird die Welle so bearbeitet, dass Materialanhäufungen entstehen, deren Durchmesser den der Welle überschreiten. Beim Aufpressen wird dieses Material durch den Nocken umgeformt, so dass der Nocken durch eine Querpressung auf der Welle fixiert wird.

Nocken für eine solche Herstellungsmethode von Nockenwellen sind in den Dokumenten EP-A2 1058033 und WO-A1 01/94802 beschrieben worden.

Die Nabenöffnung einer Nabe bzw. eines Nockens gemäss Dokument EP-A2 1058033 ist durch zwei konusartig ausgebildete Abschnitte der Nabe ausgezeichnet. Diese beiden Nabenabschnitte schliessen sich aufeinanderfolgend an der in Aufpressrichtung vorne befindlichen Stirnseite des Nocken an. Die beiden konusartigen Abschnitte weisen jeweils eine unterschiedliche Steigung auf. Nachteilig wirkt sich bei dieser Profilgestaltung aus, dass beim Aufpressen des Nockens auf die Welle bereits am Anfang der Nokkenöffnung eine Kraftwirkung auf den Nocken wirkt und es so zu Spannungen im Nockenmaterial kommen kann. Diese Spannung führen zu Mikrorissen in der Struktur und können eine Schwächung oder ein Versagen der Befestigungswirkung und gegebenenfalls Funktionsstörungen der Nockenwelle aufgrund von Deformierungen hervorrufen.

Die WO-A1 01/94802 zeigt einen Nocken mit einem Einlaufbereich, der etwa die Hälfte der Nocken- bzw. Nabenbreite einnimmt. Das Profil dieses Einlaufbereiches wird als konisch beschrieben und geht kontinuierlich in einen Nabenbereich über, der die restliche Breite der Nabe einnimmt und entweder konisch oder zylindrisch ausgebildet ist. Durch diese Gestaltung der Nabe soll eine Verlagerung der Fügespannungen in die Mitte der Nabenbreite ermöglicht werden. Es wird aber darauf hingewiesen, dass es bereits nach Beginn des Einlaufbereiches zu einer Umformung der Materialanhäufungen auf der Welle kommt. Daher sind auch in diesem Bereich Beeinträchtigungen des Materialgefüges mit der Folge von Mikrorissen im Aussenbereich der Nockennabe mit den zuvor beschriebenen Auswirkungen zu erwarten.

Die Aufgabe der vorliegenden Erfindung ist es, die Nachteile der bekannten Naben zu vermeiden und eine alternative Nabe zum Aufpressen auf einen Grundkörper bereitzustellen.

Die Aufgabe wird gelöst durch eine Nabe zum Aufpressen auf einen Grundkörper, wobei die Nabe eine Nabenöffnung aufweist, die durch Naben-Stirnflächen begrenzt wird, und wobei die Nabe einen sich in Aufpressrichtung P verjüngenden Einführungsbereich A2 aufweist und die Nabenöffnung durch einen zylindrischen Abschnitt A1 gekennzeichnet wird, der in Aufpressrichtung gesehen zwischen Stirnfläche und Einführungsbereich A2 angeordnet ist.

Unter einer Nabe im Sinne der Erfindung ist ein Abschnitt mit einer durchgängigen Öffnung innerhalb eines Bauteils zu verstehen, wie es beispielsweise bei Nocken, Rädern, Zahnrädern, Exzenterringen, Sensorringen, Kurvenscheiben oder dergleichen ausgebildet ist und für das Aufbringen von Nocken, Zahnrädern, Exzenterringen, Sensorringen, Kurvenscheiben etc. auf einen Grundkörper erforderlich ist. Obgleich die Beschreibung weitgehend auf Naben in Nocken ausgerichtet ist, ist die Erfindung nicht darauf beschränkt. Naben können als separates, z. B. rohrförmiges Element ausgebildet sein. Als Grundkörper kommen in erster Linie Wellen, Rohre oder auch Lager (z. B. Kugellager oder Büchsen) zur Anwendung. Solche Naben sind meist am oder in dem Bauteil befestigt, durch das die Nabe gelagert wird. Naben lassen sich auch integral als Öffnung in einem Bauteil ausbilden.

Die zylindrische Ausbildung des Abschnitts A1 der Nabe vermeidet erfindungsgemäss eine direkte Kraftwirkung zwischen einem Bauteil bzw. einem Grundkörper, auf dem die Nabe plaziert werden soll, und der Nabe im Bereich der Stirnseite, da die Umformung der Materialanhäufungen auf der Welle beim Aufpressen der Nabe auf den Grundkörper erst im sich verjüngenden Einführungsbereich A2 beginnt. Etwaige Fügespannungen treten somit erst im Einführungsabschnitt A2 auf; sie bewirken den festen Sitz der Nabe auf dem Grundkörper. Der Grundkörper kann eine Welle sein, die sowohl aus Vollmaterial als auch aus einem ausgehöhlten Rohr oder ähnlichem bestehen kann.

Durch die Vermeidung der Fügespannung im zylindrischen Abschnitt A1 wird die Bildung von Schwachstellen wie Mikrorissen oder Deformationen bzw. Materialverformungen in dem Körper, der die Nabe trägt, z. B. der Lauffläche eines Rads oder eines Nockens vermieden. Eine Beeinträchtigung der Funktion des Nockens sowie der Materialstabilität des Nockens wird verhindert.

Allgemein ist die Abfolge von Abschnitten bzw. Bereichen der Nabe so zu verstehen, dass die jeweils niedrigere Zahl in Aufpressrichtung vorne zu liegen kommt. Die Aufpressrichtung ist diejenige, in der beispielsweise der Nocken über den Grundkörper geführt wird. Die Nocken-Stirnfläche ist die Oberfläche des Nokkens, deren Normale parallel zur Aufpressrichtung orientiert ist.

Vorteilhaft weist die erfindungsgemässe Nabe einen zylindrischen Abschnitt A1 der Nabenöffnung auf, dessen Durchmesser mindestens gleich gross wie der grösste Durchmesser des Grundkörpers ist. Ein derartiger Durchmesser D1 erlaubt ein einfaches Plazieren der Nabe auf dem Grundkörper und ermöglicht beim Aufpressen entstehende Fügespannungen im Bereich der Stirnfläche zu vermeiden. Eine Kraftwirkung zwischen dem Grundkörper und der Nabe wird im zylindrischen Abschnitt A1 nicht aufgebaut.

Ebenfalls vorteilhaft ist eine Nabe ausgebildet, die eine Nabenöffnung mit einem zweiten zylindrischen Abschnitt A3 aufweist. Dieser zweite zylindrische Abschnitt A3 ist auf der gegenüberliegenden Seite des Einführungsbereiches A2, bezogen auf den ersten zylindrischen Abschnitt A1, angeordnet. Dieser Abschnitt A3 vermeidet beim Aufpressen der Nabe auch eine Ausbildung von Schwachstellen insbesondere an der zweiten Stirnseite der Nabe, da der Durchmesser des Grundkörpers bereits im Einführungsbereich bzw. Einführungsabschnitt A2 auf das Mass des unbearbeiteten Grundkörpers, insbesondere der Welle reduziert wird. Es tritt im Abschnitt A3 keine wesentliche Kraftübertragung zwischen Welle und Nabe auf.

Grundsätzlich ist der Durchmesser D1 des ersten zylindrischen Abschnitts A1 grösser als der Durchmesser D2 des zylindrischen Abschnitts A3.

Eine Ausführungsform einer erfindungsgemässen Nabe zeichnet sich durch einen Einführungsabschnitt A2 aus, der ein kurvenförmiges Profil aufweist. Dieses Profil entspricht aneinander gereihten Kreis-segmenten, wobei diese Kreissegmente unterschiedliche Radien aufweisen. Die Länge sowie der Radius der einzelnen Kreissegmente richtet sich nach der gewünschten Profilgestaltung. Selbstverständlich lässt sich das Profil auch durch Abschnitte anderer Kurvenformen bilden. Die Radien der Kreissegmente, die benachbart zum ersten zylindrischen Abschnitt A1 sind, sind klein. Der Kurvenverlauf hin zum dritten Abschnitt A3 basiert auf Kreissegmenten mit einem jeweils zunehmenden und grösseren Radius. Die kontinuierliche Krümmung des Kurvenprofils erlaubt eine Vermeidung von Maxima der Fügespannung und eine sich über einen grösseren Bereich erstreckende kraftschlüssige Verbindung. Die Kurvensegmente gehen vorzugsweise kontinuierlich ineinander über, d.h. sie schliessen sich jeweils tangential aneinander an. Die Kurvensegmente können aber auch diskontinuierlich ineinander übergehen, d.h. an der jeweiligen Übergangsstelle ergibt sich eine Übergangskante. Des weiteren kann das erste Kurvensegment kontinuierlich oder diskontinuierlich an den Abschnitt A1 anschlies-sen. Das gleiche gilt für den letzten Kurvenabschnitt der kontinuierlich oder diskontinuierlich in den Abschnitt A3 verlaufen kann. Bei einer besonders einfachen Ausführungsform wird die Kurve zwischen den Abschnitten A1 und A3 durch einen Radius R gebildet, der z.B. diskontinuierlich unter Bildung der Übergangskante E1 an den Abschnitt A1 anschliesst und z.B. kontinuierlich, d.h. ohne Bildung einer Übergangskante in den Abschnitt A3 einläuft.

In einer bevorzugten Ausführungsform weist der Einführungsbereich (Abschnitt) A2 der Nabe eine Aufteilung in zwei Unterabschnitte auf, die entlang der Längsachse der Nabe kegelstumpfförmig ausgebildet sind. Dabei besitzen die beiden kegelstumpfförmigen Unterabschnitte unterschiedliche Kegelwinkel. Der Kegelwinkel K1 des zum Abschnitt A1 benachbarten Unterabschnitts A2' ist grösser als der Kegelwinkel K2 des zum Abschnitt A3 benachbarten Unterabschnitts A2''. Die unterschiedlichen Kegelwinkel erlauben einerseits eine bessere Zentrierung der Nabe beim Aufpressen auf dem Grundkörper und andererseits eine ausreichende Kraftschlüssigkeit zwischen der Nabe und dem Grundkörper. Insbesondere im Hinblick auf die Kraftschlüssigkeit ist es wichtig, dass diese über einen ausreichenden Längenbereich der Nabe vorhanden ist, um eine dauerhafte Verbindung auch unter Arbeitsbedingungen zu gewährleisten. Bevorzugt wird weiterhin der Kegel mit dem Kegelwinkel K1 in die gleiche Richtung geöffnet sein wie der Kegel mit dem Kegelwinkel K2. Damit kann ein weitgehend kontinuierlicher Übergang von einem grösseren Durchmesser zu einem kleineren Durchmesser sichergestellt, werden. Gleichzeitig wird der Kraftschluss zwischen Nabe und Grundkörper über einen breiteren Bereich hergestellt.

Als Kegelwinkel ist der Winkel zu verstehen, der von der fiktiven Spitze des Kegelstumpfes aus gesehen die Aufweitung des fiktiven Kegels bestimmt. Der halbe Wert eines Kegelwinkels ergibt somit die Steigung bzw. Neigung der Kegelfläche in Bezug zur Höhe des Kegelstumpfes. Die räumliche Orientierung des Kegelstumpfes zur Nabe ist zudem derart, dass die Kegelstumpfspitze mit der Längsachse der Nabe zusammenfällt.

In einer bevorzugten Ausführungsform wird der Einführungsbereich A2 der Nabe durch einen einzigen Kegelstumpf (Konus) gebildet, der sich ausgehend vom Durchmesser D1 auf den Durchmesser D2 verjüngt. Dabei bilden sich an den Übergangsstellen die Kanten E1 und E2.

In einer weiter bevorzugten Ausführungsform weist der Nocken im ersten Abschnitt A1 einen Durchmesser D1 auf, der mindestens gleich gross wie ein Durchmesser W1 des Grundkörpers ist. Der Durchmesser W1 entspricht dem Durchmesser der durch eine Bearbeitung des Grundkörpers entstandenen Materialanhäufungen auf dem Grundkörper. Diese Materialanhäufungen sind in Form von Wülsten oder Stegen ausgebildet. Die Materialanhäufungen können sich entweder in Umfangsrichtung des Grundkörpers oder parallel zur Längsachse der Nabe erstrecken. Aufgrund der Wahl des Durchmessers D1 als mindestens gleich gross wie der Durchmesser W1 kann die Nabe beim Aufpressen zuerst über die Materialanhäufungen gleiten, ohne dass bereits eine Materialumformung einsetzt. Die Nabe wird gegenüber dem Grundkörper geführt und ermöglicht eine bessere Zentrierung der Nabe auf dem Grundkörper. Gleichzeitig erfolgt auch, wie zuvor bereits ausgeführt, eine Verlagerung möglicher Fügespannungen in den zentralen Bereich (Einführungsabschnitt A2) der Nabe und einer damit verbundenen Vermeidung von Schwachstellen an exponierten Stellen des Nockens. Als exponierte Stellen sind hier die Stirnfläche bzw. der unmittelbar darunter liegende Bereich des Nockens zu verstehen.

Ebenfalls vorteilhaft ist eine Nabe ausgeführt, wenn der Durchmesser D2 mindestens gleich gross oder grösser wie der Durchmesser W2 des Grundkörpers ist. Der Durchmesser W2 entspricht dem Durchmesser des unbearbeiteten Grundkörpers. Die geeignete Wahl des Durchmessers D2 ermöglicht ebenfalls eine Führung der Nabe auf dem Grundkörper während des Aufpressens. Zugleich wird verhindert, dass es zu wesentlichen Fügespannungen in diesem zweiten zylindrischen Abschnitt A3 kommt und somit ebenfalls zu Schwachstellen mit möglicherweise negativen Auswirkungen auf die Lebensdauer des Naben-Grundkörper-Gefüges. Der Durchmesser D2 wird gegenüber dem Durchmesser W2 bevorzugt so ausgewählt sein, dass eine Spielpassung zwischen Nabe und Grundkörper erzielt wird.

In einer Ausführungsform weist die erfindungsgemässe Nabe einen ersten Abschnitt A1 auf, der 2% bis 30% der Gesamtlänge L der Nabe umfasst. Mit einer solchen Länge wird sichergestellt, dass einerseits eine ausreichende Führung der Nabe erzielt wird, andererseits mögliche Fügespannungen aber weit genug von der Stirnfläche und exponierten Stellen der Nabe entfernt sind, um die eingangs erläuterten Nachteile zu vermeiden. Bevorzugt wird der Abschnitt A1 eine Länge von 5% bis 15% der Gesamtlänge der Nabe besitzen.

Ebenfalls vorteilhaft ist eine Nabe, welche einen dritten Abschnitt A3 mit einer Länge von 2% bis 30% der Gesamtlänge L der Nabe aufweist. Eine derartige Länge stellt sicher, dass keine wesentlichen Fügespannungen im Bereich des Abschnitts A3 entstehen und es so zu Schwachstellen an den exponierten Stellen kommt. Auch wird eine ausreichend gute Zentrierung der Nabe auf dem Grundkörper ermöglicht. Bevorzugt ist weiterhin eine Länge des Abschnitts A3 von 5% bis 15% der Gesamtlänge L der Nabe.

In einer weiteren Ausführungsform umfasst der zweite Einführungsabschnitt A2 der Nabe eine Länge von 40% bis 96%,der Gesamtlänge L der Nabe. Diese Länge des Einführungsbereichs A2 bildet den Bereich der Nabe, der den Kraftschluss von Nabe und Welle aufnimmt. Dies ist deshalb wichtig, um eine ausreichende Funktion der gefertigten Nockenwelle auch unter langen Einsatzbedingungen sicherstellen zu können. Bevorzugt besitzt der Einführungsabschnitt eine Länge zwischen 70% und 90% der Gesamtlänge L der Nabe.

Ein weiterer Aspekt der erfindungsgemässen Nabe ist das Längenverhältnis der beiden Unterabschnitte des Einführungsabschnitts A2. Das Verhältnis des Unterabschnitts A2' zum Unterabschnitt A2" liegt zwischen 0.1 und 10. Durch eine geeignete Wahl lässt sich die Entwicklung des Kraftschlusses zwischen Nabe und Grundkörper vorteilhaft steuern. Bevorzugt ist ein Längenverhältnis zwischen erstem Unterabschnitt und zweitem Unterabschnitt von 0.1 bis 5.

Weiterhin vorteilhaft ist eine Nabe, die einen ersten Kegelwinkel K1 von 10° bis 40° aufweist. Dieser Kegelwinkelbereich erlaubt die Materialumformung soweit voranzutreiben, dass ein Kraftschluss zwischen Nabe und Grundkörper unmittelbar erzielt werden kann.
Eine erfindungsgemässe Nabe besitzt vorteilhaft einen zweiten Kegelwinkel K2 zwischen 1° und 15°. Dieser Kegelwinkelbereich führt zu einem ausgedehnteren Kontaktbereich zwischen Nabe und der Welle, der einen annähernd gleichmässigen Kraftschluss zwischen Nabe und Grundkörper herstellt. Aufgrund einer derartigen Ausgestaltung werden mögliche Maxima an Fügespannungen weitgehend reduziert bzw. vermieden und somit uhgleichmässige und schadensträchtige Belastungen verringert.

In einer weiteren Ausführungsform weist eine erfindungsgemässe Nabe mindestens eine Ausnehmung auf, die sich mindestens über die Länge der Abschnitte A2 und A3 der Nabe erstreckt. Unter einer Ausnehmung ist eine Materialabtragung zu verstehen, die sich auf einen kleinen Teil des Umfangs der Nabe begrenzt und die sich maximal bis zum Durchmesser D1 ausgehend von der Längsachse der Nabe radial nach aussen erstreckt. Damit wäre eine solche Ausnehmung beispielsweise als eine Rille parallel der Längsachse der Nabe anzusehen, die sich in einem kleinen Umfangsbereich der Nabe vom ersten Abschnitt A1 durch die Abschnitte A2 und A3 fortsetzt. Eine derartige Ausnehmung stellt sicher, dass zusätzlich zum Kraftschluss ein Formschluss zwischen Nabe und Grundkörper erzielt wird und dadurch eine Verdrehung des Nockens in Umfangsrichtung vermieden wird.

Die Erfindung umfasst im weiteren ein System umfassend einen Grundkörper, insbesondere eine Welle, und einen Nocken, wobei die Nabe den Nocken bzw. dessen Stirnflächen durchdringt. Die Nabe weist einen sich verjüngenden Einführungsbereich A2 auf. Nabe und Welle sind dabei so ausgebildet, dass beim Aufpressen des Nockens der Abstand des Punktes für einen Erstkontakt zwischen dem grössten Aussendurchmesser der Welle und dem Einführungsbereich A2 mindestens 2 % bis 40% der Gesamtlänge L der Nabe beträgt. Bevorzugt sind Abstandswerte von mindestens 3% bis 20%, weiter bevorzugt solche von mindestens 5% bis 15% der Gesamtlänge L der Nabe.

Im weiteren betrifft die Erfindung eine Nockenwelle, auf die mindestens eine wie vorstehend ausgeführt erfindungsgemässe Nabe, insbesondere ein Nocken aufgepresst ist.

Als Ausführungsbeispiel für eine Nabe wird in der folgenden Beschreibung der Erfindung ein Nocken für gebaute Nockenwellen beschrieben. Die Erfindung ist aber nicht nur auf Nocken für gebaute Nockenwellen beschränkt. Naben können z.B. auch als Zahnräder, Exzenterringe, Sensorringe, Kurvenscheiben oder dergleichen ausgebildet sein.

Die schematische Darstellungen des erfindungsgemässen Nockens zeigen:
- Figur 1:: Eine Ansicht der Aufpressseite eines Nockens.
- Figur 2:: Querschnitt Q-Q' des Nockens aus Figur 1.
- Figur 3:: Nockenquerschnitt und Welle mit Materialanhäufung vor dem Aufpressen.
- Figur 4:: Nockenquerschnitt und Materialanhäufungen der Welle nach dem Aufpressen.
- Figur 5:: Weitere Ausführungsform des Nockens mit einer axial verlaufenden Ausnehmung.
- Figur 6:: Weitere Ausführungsform des Einführungsabschnittes A2 mit einer axial verlaufenden Ausnehmung.
- Figur 7:: Weitere Ausführungsform des Einführungsabschnittes A2.
- Figur 8:: Weitere Ausführungsform des Einführungsabschnittes A2.

Die Figuren zeigen Ausführungsbeispiele von Naben und Nocken mit den Merkmalen der Erfindung in einer schematischen Darstellung; sie stellen keine exakten Grössenverhältnisse bzw. Massangaben dar und dienen rein zur Verdeutlichung des prinzipiellen Aufbaus einer erfindungsgemässen Nabe.

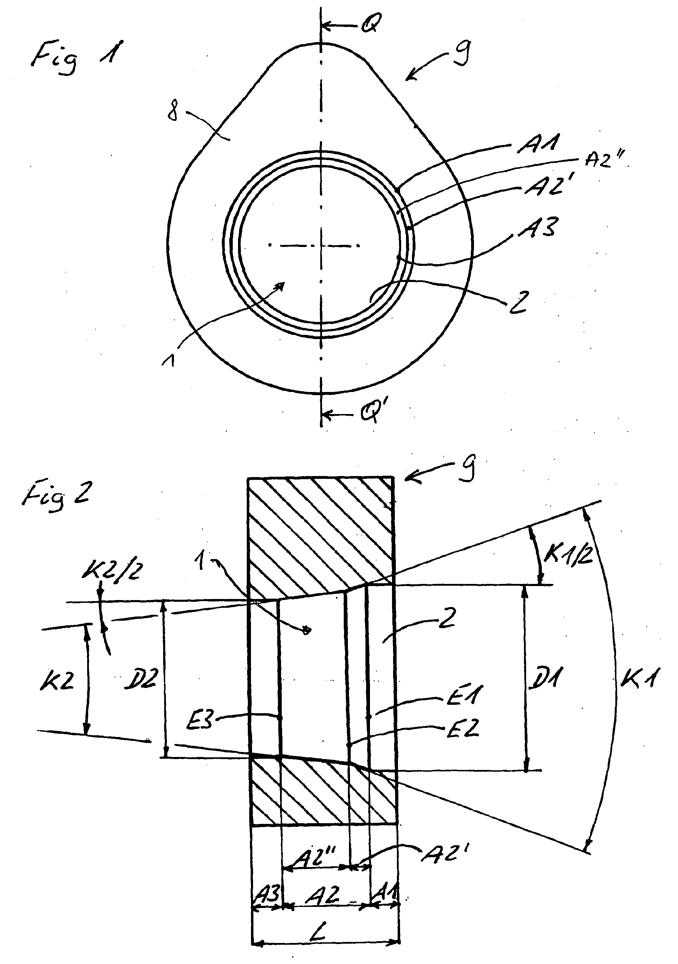

Gemäss Figuren 1 und 2 weist ein Nocken 9 eine Nabe 1 mit einer Nabenöffnung 2 in der Stirnfläche 8 auf. Der zylindrische Abschnitt A1 mit dem Durchmesser D1 wird durch die Kante E1 (nicht in der Figur erkennbar) abgeschlossen. Daran schliesst sich der erste Unterabschnitt A2' des zweiten Abschnitts (Einführungsbereich) A2 an. Die Oberfläche dieses Unterabschnitts A2' entspricht einem Kegelstumpf mit dem Kegelwinkel K1. Dies ist in Figur 2 erkennbar, die einen Schnitt entlang Q-Q' der Figur 1 darstellt. Der folgende Unterabschnitt A2" ist ebenfalls kegelstumpfförmig ausgebildet, weist aber einen kleineren Kegelwinkel K2 auf, der kleiner ist als K1. Abschnitt A3 der Nabenöffnung 2 weist eine zylindrische Form mit dem Durchmesser D2 auf. Ebenfalls sind die Übergangskanten E1, E2 und E3 erkennbar, die die Unterteilung der Nabe 1 in die einzelnen Abschnitte A1, A2', A2" und A3 verdeutlichen.

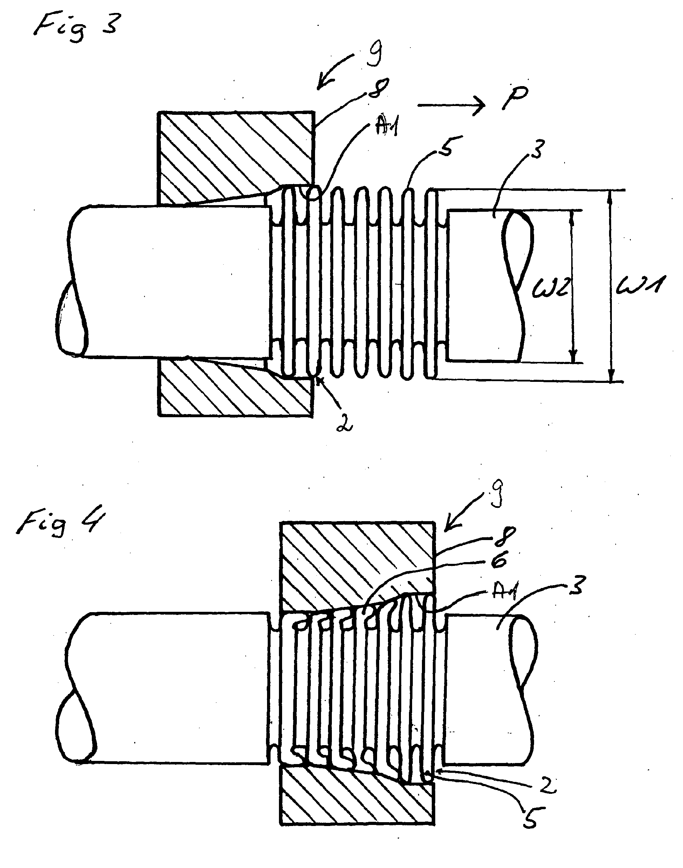

Die beiden Figuren 3 und 4 zeigen einen als Welle ausgebildeten Grundkörper 3 mit entsprechenden Materialanhäufungen 5. Der Pfeil P zeigt dabei die Aufpressrichtung der Nabenöffnung 2. In Figur 3 ist der Nocken 9 soweit auf den Grundkörper 3 aufgeschoben bzw. aufgepresst, dass die Materialanhäufungen 5 sich im Abschnitt A1 der Nabenöffnung 2 befinden. Deutlich ist erkennbar, dass noch keine Materialumformung stattgefunden hat. Dies wird in Figur 4 sichtbar, die den Nocken 9 nach dem Aufpressen zeigt. Die in Aufpressrichtung hinten liegenden Materialanhäufungen 5 befinden sich bereits im Unterabschnitt A2" der Nabenöffnung 2 und wurden bereits erheblich umgeformt (Materialumformung 6).

Der Abschnitt A3 nimmt die im Abschnitt A2 bereits umgeformten Wellenwülste auf, ohne dass der Abschnitt A3 diese zusätzlich noch umformt. Der Grundkörper 3 weist im unbearbeiteten Bereich einen Durchmesser W2 und im Bereich der Materialanhäufungen 5 einen Durchmesser W1 auf.

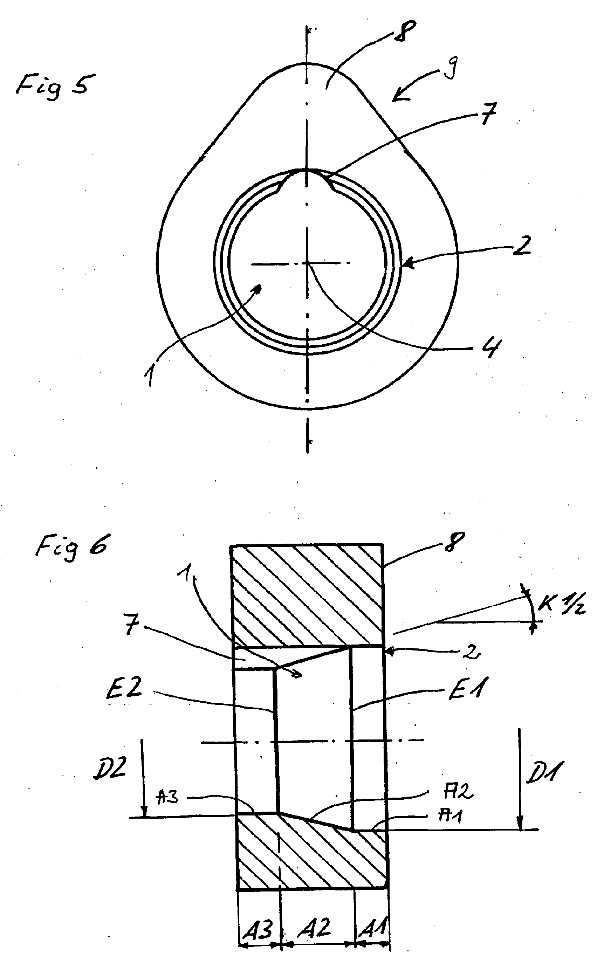

Eine Ausnehmung 7 in der Nabenöffnung 2 der Nabe 1 des Nockens 9 zeigt Figur 5. In der Aufsicht auf die Stirnfläche 8 ist erkennbar, wie die Ausnehmung 7 sich nur in einen Teil des radialen Umfangs der Nabe 1 erstreckt. Der radial von der Längsachse 4 betrachtet äusserste Punkt der Ausnehmung 7 fällt mit der Oberfläche des Abschnitts A1 zusammen. Daher kann die Ausnehmung 7, da sie sich über die Länge A2 und A3 erstreckt, als eine Rille bezeichnet werden. Diese Ausnehmung 7 bewirkt beim Aufpressen des Nockens 9 auf einen Grundkörper 3 keine Materialumformung. Dadurch erfährt der Nocken 9 eine umfangsseitige Fixierung auf einem Grundkörper 3. Es können auch mehr als eine Ausnehmungen 7 in der Nabe 1 angeordnet werden. Auch die Profilierung einer solchen Ausnehmung kann an die notwendigen Anforderungen angepasst werden. Figur 6 zeigt eine weitere Ausführungsform des Abschnitts A2 der Nabe 1. Dieser Abschnitt A2 wird hier durch einen einzigen Konus gebildet, der die Abschnitte A1 und A3 durch die innenliegenden Kanten E1 und E2 verbindet. In Figur 6 ist zudem die Ausnehmung 7 im Querschnitt gezeigt. Weiterhin erkennbar ist auch der halbe Kegelwinkel K1 für den Abschnitt A2 sowie die Durchmesser D1 und D2 der Abschnitte A1 bzw. A3.

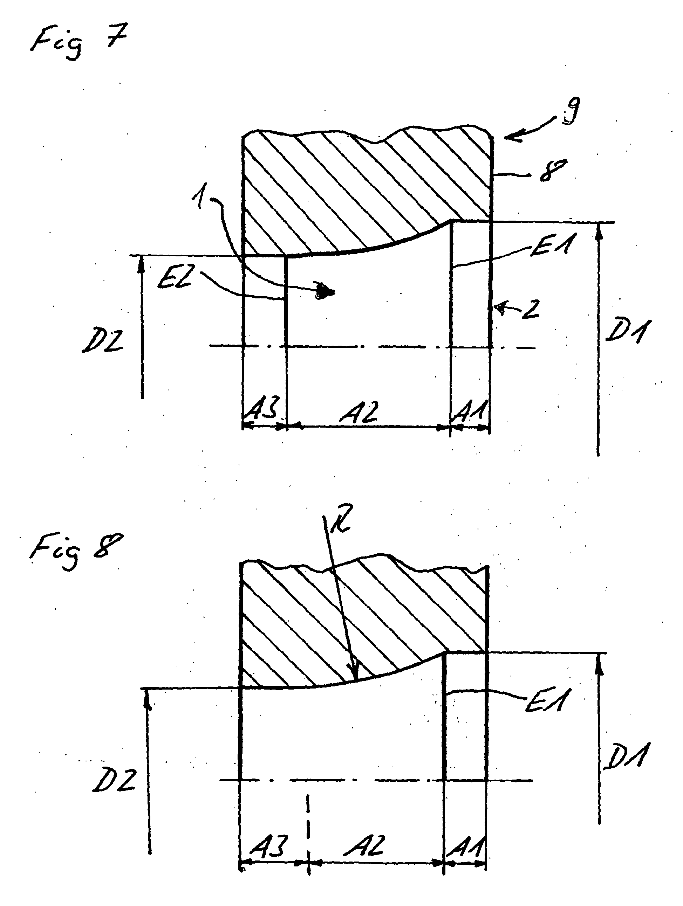

Eine weitere Ausführungsform des Abschnitts A2 einer erfindungsgemässen Nabe 1 zeigt Figur 7. Neben den beiden Abschnitten A1 und A3 der Nabenöffnung 2 weist der Nocken 9 einen einteiligen Abschnitt A2 auf. Das Profil des Abschnitts besteht aus einem sich kontinuierlich ändernden Kurvenverlauf. Der Kurvenverlauf lässt sich als eine Aneinanderreihung von Kreissegmenten beschreiben, wobei der Radius dieser Kreissegmente sich fortlaufend vergrössert. Das sich direkt an den Abschnitt A1 anschliessende Kreissegment besitzt den kleinsten Radius aller Kreissegmente, die den Kurvenverlauf, d.h. das Profil des Abschnitts A2 bilden. Der grösste Radius, der unmittelbar in den Abschnitt A3 mündet, kann mittels einer Übergangskante E2 diskontinuierlich, wie in Figur 7 gezeigt, an den Abschnitt A3 anschliessen. Dieser Übergang in den Bereich A3 kann aber auch kontinuierlich erfolgen, d.h. ohne Bildung einer Kante E2. In diesem Fall läuft der grösste Radius des Abschnitts A2 tangential in den Abschnitt A3 (analog Figur 8). Der Kurvenverlauf im Abschnitt A2 kann auch durch einen einzigen Radius R gebildet sein, der unter Bildung der Kante E1 diskontinuierlich an den Abschnitt A1 anschliesst und tangential d.h. kontinuierlich ohne Kante E2 in den Bereich A3 einmündet (Figur 8).

Aufgrund des sich zunehmend abflachenden Profilverlaufs im Abschnitt A2 in Richtung zum Abschnitt A3 werden die Fügespannungen über einen grösseren Bereich verteilt, ohne übermässig grosse Belastungsmaxima hervorzurufen. Die Fügespannungen sind jedoch gleichzeitig in das Innere des Nockens 9 verlagert. Somit werden strukturelle Defekte wie etwa Mikrorisse in den Aussenbereichen A1 und A3 der Nockenöffnung 2 vermieden. Die Funktionalität, insbesondere die Langzeitstabilität wird dadurch verbessert. Weiterhin vorstellbar ist, dass das Kurvenprofil in zwei oder mehrere Unterabschnitte mit jeweils individuellen Kurvenprofilen aufgeteilt ist, wie dies vorangehend für die Ausführung mit kegelstumpfförmigen Abschnitten beschrieben wurde.

Eine Ausführungsbeispiel eines erfindungsgemässen Nockens 9 basiert auf einem Nockenkörper aus Kugellagerstahl mit einer Nokkenbreite von 15 mm. Die Länge der einzelnen Abschnitte A1 und A3 sowie dem Einführungsabschnitt A2 der Nabenöffnung 2 beträgt 1 mm, 1 mm sowie 13 mm. Der Durchmesser D1 des Abschnitts A1 beträgt 25.6 mm, der Durchmesser D2 des Abschnitts A3 hingegen 25.0 mm. Der Einführungsabschnitt A2 unterteilt sich in die Unterabschnitte A2' und A2'' mit jeweils einer Länge von 2 mm und 11 mm. Der Unterabschnitt A2' weist einen Kegelwinkel von 30°, der Unterabschnitt A2'' einen Kegelwinkel von 15° auf. Die Umlauffläche des Nockens 9 sowie die Oberfläche der Nabe 1 ist gehärtet, um die Betriebsbelastungen zu verringern und die Lebensdauer zu erhöhen.

Bei der Herstellung einer Nockenwelle wird an der entsprechenden Stelle der Welle (Grundkörper 3) durch Bearbeitung eine Materialanhäufung 5 erzeugt, deren Länge in etwa der Nockenbreite entspricht, d.h. 15 mm und deren Durchmesserdifferenz W1 minus W2 etwa 0.6 mm beträgt. Ein erfindungsgemässer Nocken 9 wird auf die Welle 3 aufgesetzt und mit einer Aufpresskraft von ca. 20,000 Newton über diese Materialanhäufung gepresst. Dabei muss auf das korrekte Aufpressen, insbesondere im Hinblick auf die Positionierung der Nabenmitte, d.h. des Einführungsabschnitts A2 über dieser Materialanhäufung, geachtet werden. Nach Abschluss des Aufpressens des ersten Nockens 9 werden die weiteren Nocken 9 sukzessiv mit dem entsprechend vorbestimmten Abstand auf die jeweils einzeln erzeugten Materialanhäufungen 5 aufgepresst.

### Bezugszeichen und Benennungen:

- 1: Nabe
- 2: Nabenöffnung
- 3: Grundkörper
- 4: Längsachse der Nabe
- 5: Materialanhäufung
- 6: Materialumformung
- 7: Ausnehmung
- 8: Stirnfläche
- 9: Nocken

- A1: Längenabschnitt 1
- A2: Längenabschnitt 2
- A2': Unterabschnitt von A2
- A2": Unterabschnitt von A2
- A3: Längenabschnitt 3
- D1: Durchmesser 1
- D2: Durchmesser 2
- E1: Kante 1
- E2: Kante 2
- E3: Kante 3
- K1: Kegelwinkel 1
- K2: Kegelwinkel 2
- L: Nabenbreite
- P: Aufpressrichtung
- Q-Q': Schnittachse
- R: Kreisbogen, Radius
- W1: Durchmesser Materialanhäufung
- W2: Durchmesser Grundkörper

## Patentansprüche

1. Nabe (1) mit einer Nabenöffnung (2) in den Stirnflächen (8) zum Aufpressen auf einen Grundkörper (3), wobei die Nabenöffnung (2) einen sich in Aufpressrichtung (P) verjüngenden Einführungsbereich (A2) aufweist, **dadurch gekennzeichnet, dass** in Aufpressrichtung gesehen zwischen Stirnfläche (8) und Einführungsbereich (A2) ein zylindrischer Abschnitt (A1) angeordnet ist.

2. Nabe (1) nach Anspruch 1, **dadurch gekennzeichnet, dass** der Durchmesser (D1) des zylindrischen Abschnitts (A1) der Nabenöffnung (2) mindestens gleich gross ist wie der grösste Durchmesser des Grundkörpers (3), auf den die Nabe (1) aufzupressen ist.

3. Nabe (1) nach Anspruch 1 oder 2, **dadurch gekennzeichnet, dass** die Nabenöffnung (2) einen zweiten zylindrischen Abschnitt (A3) aufweist, wobei der zweite zylindrische Abschnitt (A3) bezogen auf den ersten zylindrischen Abschnitt (A1) auf der gegenüberliegenden Seite des Einführungsbereiches (A2) angeordnet ist.

4. Nabe (1) nach einem der Ansprüche 1 bis 3, **dadurch gekennzeichnet, dass** der sich verjüngende Einführungsbereich (A2) ein Kurvenprofil aufweist, wobei das Kurvenprofil vorzugsweise aus aneinander gesetzten Kreissegmenten mit unterschiedlichen Radien gebildet wird und wobei die Radien der Kreissegmente zum zylindrischen Abschnitt (A1) hin kleiner werden.

5. Nabe (1) nach einem der Ansprüche 1 bis 3, **dadurch gekennzeichnet, dass** der Einführungsbereich (A2) ein Kurvenprofil aufweist, wobei das Kurvenprofil vorzugsweise durch einen Kreisbogen (R) gebildet wird, der diskontinuierlich an den zylindrischen Abschnitt (A1) anschliesst und vorzugsweise diskontinuierlich oder kontinuierlich in den Abschnitt (A3) mündet.

6. Nabe (1) nach einem der Ansprüche 1 bis 3, **dadurch gekennzeichnet, dass** der Einführungsbereich (A2) durch einen Kegelstumpf gebildet wird, der die Abschnitte (A1) und (A3) mittels Übergangskanten (E1) und (E2) verbindet.

7. Nabe (1) nach einem der Ansprüche 1 bis 3, **dadurch gekennzeichnet, dass** der Einführungsbereich (A2) in zwei Unterabschnitte aufgeteilt ist und beide Unterabschnitte entlang der Längsachse (4) kegelstumpfförmig ausgebildet sind, und dass der Kegelwinkel (K1) des zum Abschnitt (A1) hin angeordneten Unterabschnitts (A2') grösser ist als der Kegelwinkel (K2) des zum Abschnitt (A3) hin angeordneten Unterabschnitts (A2'').

8. Nabe (1) nach einem der Ansprüche 1 bis 7, **dadurch gekennzeichnet, dass** der Durchmesser (D2) mindestens gleich gross wie der Durchmesser (W2) des Grundkörpers (2) ist, wobei der Durchmesser (W2) dem Durchmesser des unbearbeiteten Grundkörpers (2) entspricht.

9. Nabe (1) nach einem der Ansprüche 1 bis 8, **dadurch gekennzeichnet, dass** die Länge des ersten zylindrischen Abschnitts (A1) 2% bis 30% der Gesamtlänge (L) der Nabe (1) beträgt.

10. Nabe (1) nach einem der Ansprüche 3 bis 9, **dadurch gekennzeichnet, dass** die Länge des zweiten zylindrische Abschnitts (A3) 2% bis 30% der Gesamtlänge (L) der Nabe (2) beträgt.

11. Nabe (1) nach einem der Ansprüche 1 bis 10, **dadurch gekennzeichnet, dass** die Länge des Einführungsbereichs (A2) 40% bis 96% der Gesamtlänge (L) der Nabe (2) umfasst.

12. Nabe (1) nach einem der Ansprüche 7 bis 11, **dadurch gekennzeichnet, dass** das Längenverhältnis des Unterabschnitts (A2') zum Unterabschnitt (A2'') zwischen 0.1 und 10 liegt.

13. Nabe (1) nach einem der Ansprüche 7 bis 12, **dadurch gekennzeichnet, dass** der erste Kegelwinkel (K1) 10° bis 30° beträgt.

14. Nabe (1) nach einem der Ansprüche 7 bis 13, **dadurch gekennzeichnet, dass** der zweite Kegelwinkel (K2) 1° bis 15° beträgt.

15. Nabe (1) nach einem der Ansprüche 1 bis 14, **dadurch gekennzeichnet, dass** die Nabe (1) mindestens eine sich über die Gesamtlänge (L) der Nabe (4) erstreckenden Ausnehmung (7) erithält, wobei sich die Ausnehmung (7) auf einen Teil des Umfangs der Nabenöffnung (2) beschränkt und sich die Ausnehmung (7) maximal bis zum Durchmesser (D1) radial nach aussen erstreckt.

16. Nocken (9) mit einer Nabe (1) nach einem der Ansprüche 1 bis 14.

17. Nockenwelle umfassend mindestens einen Nocken (9) nach Anspruch 16 und einen Grundkörper (3), insbesondere eine Welle, auf welchem wenigstens ein Nocken (9) aufgepresst ist.

18. System umfassend einen Grundkörper (3), insbesondere eine Welle, und einen Nocken (9), wobei der Nocken (9) eine Nabe (1) in den Stirnflächen (8) zum Aufpressen auf den Grundkörper (3) aufweist, und wobei die Nabe (1) einen sich verjüngenden Einführungsbereich (A2) aufweist, **dadurch gekennzeichnet, dass** beim Aufpressen des Nockens (9) der Abstand des Punktes für einen Erstkontakt zwischen dem grössten Aussendurchmesser des Grundkörpers (3) und dem Einführuhgsbereich (A2) mindestens 2 % bis 40%, bevorzugt mindestens 3% bis 20% und weiter bevorzugt mindestens 5% bis 15% der Gesamtlänge (L) der Nabe (1) von der Stirnfläche (8) angeordnet ist.

19. Nockenwelle, enthaltend mindestens einen Nocken (9), wobei der Nocken (9) eine Nabe (1) mit einer Nabenöffnung (2) zur Aufnahme eines als Welle ausgebildeten Grundkörpers (3) aufweist, wobei die Nabenöffnung (2) einen sich in Aufpressrichtung (P) verjüngenden Einführungsbereich (A2) aufweist, **dadurch gekennzeichnet, dass** in Aufpressrichtung gesehen zwischen Stirnfläche (8) und Einführungsbereich (A2) ein zylindrischer Abschnitt (A1) angeordnet ist.

## Claims

1. A hub (1) having a hub opening (2) in the end faces (8) for pressing on to a main body (3), wherein the hub opening (2) has an insertion region (A2) which narrows in the pressing-on direction (P), **characterised in that** a cylindrical portion (A1) is disposed between the end face (8) and the insertion region (A2) as viewed in the pressing-on direction.

2. A hub (1) according to claim 1 **characterised in that** the diameter (D1) of the cylindrical portion (A1) of the hub opening (2) is at least of the same size as the largest diameter of the main body (3), on to which the hub (1) is to be pressed.

3. A hub (1) according to claim 1 or claim 2 **characterised in that** the hub opening (2) has a second cylindrical portion (A3), wherein the second cylindrical portion (A3) is disposed on the opposite side of the insertion region (A2) with respect to the first cylindrical portion (A1).

4. A hub (1) according to one of claims 1 to 3 **characterised in that** the narrowing insertion region (A2) has a curve profile, wherein the curve profile is preferably formed from circular segments, which are fitted together, of different radii, and wherein the radii of the circular segments decrease towards the cylindrical portion (A1).

5. A hub (1) according to one of claims 1 to 3 **characterised in that** the insertion region (A2) has a curve profile, wherein the curve profile is preferably formed by an arc (R) which discontinuously adjoins the cylindrical portion (A1) and preferably discontinuously or continuously opens into the portion (A3).

6. A hub (1) according to one of claims 1 to 3 **characterised in that** the insertion region (A2) is formed by a truncated cone which connects the portions (A1) and (A3) by means of transitional edges (E1) and (E2).

7. A hub (1) according to one of claims 1 to 3 **characterised in that** the insertion region (A2) is divided into two sub-portions and both sub-portions are in the form of a truncated cone along the longitudinal axis (4) and that the cone angle (K1) of the sub-portion (A2') arranged towards the portion (A1) is larger than the cone angle (K2) of the sub-portion (A2") arranged towards the portion (A3).

8. A hub (1) according to one of claims 1 to 7 **characterised in that** the diameter (D2) is at least of the same size as the diameter (W2) of the main body (2), wherein the diameter (W2) corresponds to the diameter of the unmachined main body (2).

9. A hub (1) according to one of claims 1 to 8 **characterised in that** the length of the first cylindrical portion (A1) is 2% to 30% of the overall length (L) of the hub (1).

10. A hub (1) according to one of claims 3 to 9 **characterised in that** the length of the second cylindrical portion (A3) is 2% to 30% of the overall length (L) of the hub (1).

11. A hub (1) according to one of claims 1 to 10 **characterised in that** the length of the insertion region (A2) includes 40% to 96% of the overall length (L) of the hub (1).

12. A hub (1) according to one of claims 7 to 11 **characterised in that** the length ratio of the sub-portion (A2') to the sub-portion (A2") is between 0.1 and 10.

13. A hub (1) according to one of claims 7 to 12 **characterised in that** the first cone angle (K1) is 10° to 30°.

14. A hub (1) according to one of claims 7 to 13 **characterised in that** the second cone angle (K2) is 1° to 15°.

15. A hub (1) according to one of claims 1 to 14 **characterised in that** the hub (1) includes at least one recess (7) extending over the overall length (L) of the hub (4), wherein the recess (7) is restricted to a part of the periphery of the hub opening (2) and the recess (7) extends radially outwardly at a maximum to the diameter (D1).

16. A cam (9) having a hub (1) according to one of claims 1 to 14.

17. A cam shaft including at least one cam (9) according to claim 16 and a main body (3), in particular a shaft, on which at least one cam (9) is pressed.

18. A system comprising a main body (3), in particular a shaft, and a cam (9), wherein the cam (9) has a hub (1) in the end faces (8) for pressing on to the main body (3), and wherein the hub (1) has a narrowing insertion region (A2), **characterised in that** when pressing on the cam (9) the spacing of the point for a first contact between the largest outside diameter of the main body (3) and the insertion region (A2) is arranged at least from 2% to 40%, preferably at least from 3% to 20% and further preferably at least from 5% to 15% of the overall length (L) of the hub (1) from the end face (8).

19. A cam shaft including at least one cam (9), wherein the cam (9) has a hub (1) having a hub opening (2) for receiving a main body (3) in the form of a shaft, wherein the hub opening (2) has an insertion region (A2) narrowing in the pressing-on direction (P), **characterised in that** a cylindrical portion (A1) is disposed between the end face (8) and the insertion region (A2) as viewed in the pressing-on direction.

## Revendications

1. Moyeu (1) présentant dans ses surfaces frontales (8) une ouverture de moyeu (2) pour le montage par pression sur un corps de base (3), l'ouverture (2) présentant une zone d'introduction (A2) qui va en diminuant dans le sens de montage (P), **caractérisé en ce qu'**une section cylindrique (A1) est disposée entre une surface frontale (8) et la zone d'introduction (A2), dans le sens de montage.

2. Moyeu (1) selon la revendication 1, **caractérisé en ce que** le diamètre (D1) de la section cylindrique (A1) de l'ouverture de moyeu (2) est au moins aussi grand que le diamètre maximal du corps de base (3) sur lequel le moyeu (1) doit être monté par pression.

3. Moyeu (1) selon la revendication 1 ou 2, **caractérisé en ce que** l'ouverture de moyeu (2) présente une seconde section cylindrique (A3), cette seconde section cylindrique (A3) étant disposée par rapport à la première section cylindrique (A1) sur le côté opposé de la zone d'introduction (A2).

4. Moyeu (1) selon l'une des revendications 1 à 3, **caractérisé en ce que** la zone d'introduction effilée (A2) présente un profil courbe, ce profil courbe étant formé de préférence de segments de cercle successifs, de rayons différents, et les rayons des segments de cercle allant en diminuant vers la section cylindrique (A1).

5. Moyeu (1) selon l'une des revendications 1 à 3, **caractérisé en ce que** la zone d'introduction (A2) présente un profil courbe, ce profil courbe étant formé de préférence par un arc de cercle (R) qui fait suite de manière discontinue à la section cylindrique (A1) et qui débouche de préférence dans la section (A3) de manière discontinue ou continue.

6. Moyeu (1) selon l'une des revendications 1 à 3, **caractérisé en ce que** la zone d'introduction (A2) est formée par un tronc de cône qui relie les sections (A1) et (A3) à l'aide d'arêtes de transition (E1) et (E2).

7. Moyeu (1) selon l'une des revendications 1 à 3, **caractérisé en ce que** la zone d'introduction (A2) est divisée en deux sous-sections et les deux sous-sections ont une forme tronconique le long de l'axe longitudinal (4), et **en ce que** l'angle de cône (K1) de la sous-section (A2') dirigée vers la section (A1) est supérieur à l'angle de cône (K2) de la sous-section (A2") dirigée vers la section (A3).

8. Moyeu (1) selon l'une des revendications 1 à 7, **caractérisé en ce que** le diamètre (D2) est au moins aussi grand que le diamètre (W2) du corps de base (3), le diamètre (W2) correspondant au diamètre du corps de base non traité (3).

9. Moyeu (1) selon l'une des revendications 1 à 8, **caractérisé en ce que** la longueur de la première section cylindrique (A1) représente 2 % à 30 % de la longueur totale (L) du moyeu (1).

10. Moyeu (1) selon l'une des revendications 3 à 9, **caractérisé en ce que** la longueur de la seconde section cylindrique (A3) représente 2 % à 30 % de la longueur totale (L) du moyeu (2).

11. Moyeu (1) selon l'une des revendications 1 à 10, **caractérisé en ce que** la longueur de la zone d'introduction (A2) couvre 40 % à 96 % de la longueur totale (L) du moyeu (2).

12. Moyeu (1) selon l'une des revendications 7 à 11, **caractérisé en ce que** le rapport de longueur de la sous-section (A2') sur la sous-section (A2") est situé entre 0,1 et 10.

13. Moyeu (1) selon l'une des revendications 7 à 12, **caractérisé en ce que** le premier angle de cône (K1) est de 10° à 30°.

14. Moyeu (1) selon l'une des revendications 7 à 13, **caractérisé en ce que** le second angle de cône (K2) est de 1° à 15°.

15. Moyeu (1) selon l'une des revendications 1 à 14, **caractérisé en ce qu'**il contient au moins un creux (7) qui s'étend sur la longueur totale (L) du moyeu (1), le creux (7) étant limité à une partie de la circonférence de l'ouverture de moyeu (2) et s'étendant radialement vers l'extérieur au maximum jusqu'au diamètre (D1).

16. Came (9) avec un moyeu (1) selon l'une des revendications 1 à 14.

17. Arbre à came comprenant au moins une came (9) selon la revendication 16 et un corps de base (3), en particulier un arbre sur lequel au moins une came (9) est montée par pression.

18. Système comprenant un corps de base (3), en particulier un arbre, et une came (9), la came (9) présentant dans les surfaces frontales (8) un moyeu (1) pour le montage par pression sur le corps de base (3), et le moyeu (1) présentant une zone d'introduction (A2) qui va en diminuant, **caractérisé en ce que** lors du montage par pression de la came (9), l'écartement, par rapport à la surface frontale (8), du point pour un premier contact entre le diamètre extérieur maximal du corps de base (3) et la zone d'introduction (A2) représente au moins 2% à 40%, de préférence au moins 3% à 20% et plus spécialement au moins 5% à 15% de la longueur totale (L) du moyeu (1).

19. Arbre à came contenant au moins une came (9), la came (9) présentant un moyeu (1) avec une ouverture (2) destinée à recevoir un corps de base (3) conçu comme un arbre, l'ouverture de moyeu (2) présentant une zone d'introduction (A2) qui va en diminuant dans le sens de montage par pression (P), **caractérisé en ce qu'**une section cylindrique (A1) est disposée entre la surface frontale (8) et la zone d'introduction (A2), dans le sens de montage par pression.
